# FASCICULE DE BREVET EUROPEEN

(11) **EP 1 298 625 B1**
(45) Date de publication et mention de la délivrance du brevet: **05.04.2006**
(21) Numéro de dépôt: 02292385.8
(22) Date de dépôt: 27.09.2002
(51) Int. Cl.: G08G 1/16, G01S 13/93, B60K 31/00

(54) **Procédé et dispositif de régulation de distance entre deux véhicules automobiles**
Verfahren und Vorrichtung zur Regelung des Abstandes zwischen zwei Fahrzeugen
Method and apparatus for regulating the distance between two mobile vehicles

(30) Priorité: 28.09.2001 FR 0112541
(43) Date de publication de la demande: 02.04.2003
(73) Titulaire: Renault s.a.s., 92100 Boulogne Billancourt (FR)
(72) Inventeur: Duplex, Nathalie, 92310 Sevres (FR); Ober, Olivier, 78210 Saint Cyr L'Ecole (FR)

(56) Documents cités:
- EP-A- 1 083 075
- FR-A- 2 770 016

## Description

La présente invention concerne un procédé de régulation de distance entre deux véhicules automobiles circulant dans la même direction. Elle se rapporte également à un système de régulation de distance correspondant.

Une application particulièrement intéressante de ce type de procédé et de dispositif est de fournir une assistance à la conduite sur autoroute ou voie rapide par le contrôle automatique de l'accélération, du freinage et, le cas échéant, de la boîte de vitesses automatique du véhicule, à partir de la détection de l'environnement devant le ce dernier.

Certains constructeurs de véhicules automobiles proposent en effet de doter les véhicules d'un système de régulation de distance permettant de maintenir automatiquement le véhicule qui en est équipé à distance d'un véhicule à suivre, et cela en contrôlant l'accélération du véhicule, par exemple par pilotage du papillon d'admission d'air pour les moteurs à essence ou par commande de l'injection pour les moteurs de type Diesel, par pilotage de la pression des freins, et éventuellement par la gestion des rapports de la boîte de vitesses du véhicule.

A cet effet, un régulateur assure l'asservissement de la distance autour d'une valeur de consigne prédéterminée.

Ce type de système embarqué est actif lorsque la vitesse du véhicule se situe dans une gamme allant d'une vitesse minimale non nulle, typiquement de l'ordre de 30 à 50 km/h, jusqu'à une vitesse maximale, typiquement de l'ordre de 160 à 180 km/h.

On pourra se référer à cet égard au document FR-A-2 770 016 qui traite de la régulation de la distance relative entre deux véhicules automobiles sur une plage de vitesse comprise entre 30 et 160 km/h.

Dans ce type de système embarqué, lorsque la vitesse du véhicule devient inférieure à la valeur de seuil de vitesse inférieure, le système est automatiquement désactivé, obligeant le conducteur à reprendre le contrôle de son véhicule, en ce qui concerne son déplacement longitudinal.

Bien que ces systèmes fournissent une assistance relativement appréciable dans la mesure où elle permet d'améliorer le confort des véhicules, surtout lors de trajets nécessitant peu de manoeuvre, ils présentent toutefois un inconvénient majeur, relatif au fait qu'il ne sont pas adaptés pour assurer l'arrêt complet du véhicule.

Le but de l'invention est donc de pallier cet inconvénient et de fournir un procédé et un système de régulation de distance pour véhicule automobile capables de fonctionner sur une plage de vitesse accrue et ce, de manière sûre et fiable.

Ainsi, selon l'invention, il est proposé un procédé de régulation de la distance entre deux véhicules automobiles circulant dans la même direction, à savoir un véhicule suiveur et un véhicule suivi, au cours duquel on détermine la distance relative entre les deux véhicules, on acquiert une valeur de mesure de la vitesse du véhicule suiveur et, lorsque la vitesse se situe dans une première plage de vitesses, on met en oeuvre une première phase de régulation de distance au cours de laquelle on agit sur les moyens d'accélération et sur les moyens de freinage du véhicule suiveur de manière à réguler la distance relative entre les véhicules autour d'une valeur de consigne de distance.

Selon un aspect de ce procédé, lorsque la vitesse du véhicule suiveur se situe dans une deuxième plage de vitesses inférieure à la première plage de vitesses, on met en oeuvre une deuxième phase de régulation de distance au cours de laquelle on agit uniquement sur les moyens de freinage du véhicule suiveur.

Selon un mode de mise en oeuvre de ce procédé, au cours de la deuxième phase de régulation de distance, après un arrêt du véhicule suiveur, on maintien les moyens de freinage activés pendant une période de temps prédéterminée puis l'on met fin à la deuxième phase de régulation.

Selon un autre mode de mise en oeuvre de ce procédé, avant la fin de la deuxième phase de régulation, on averti le conducteur du véhicule suiveur de la fin de cette régulation.

De préférence, avant la fin de la deuxième phase de régulation, on active un frein de stationnement.

Selon une autre caractéristique de ce procédé, on met fin à la deuxième phase de régulation de distance en cas d'activation des moyens d'accélération ou des moyens de freinage par le conducteur du véhicule suiveur.

Selon l'invention, il est également proposé un système de régulation de distance pour véhicule automobile, comprenant des moyens de télémétrie pour la détection d'un distance relative entre un véhicule automobile équipé dudit système et un véhicule suivi, et un calculateur comprenant des moyens de comparaison entre la vitesse du véhicule et des valeurs de seuil de vitesse supérieure et inférieure et des premiers moyens de régulation agissant sur les moyens d'accélération et sur les moyens de freinage du véhicule de manière à réguler la distance relative entre les véhicules autour d'une valeur de consigne de distance, les premiers moyens de régulation étant activés lorsque la vitesse du véhicule se situe entre les valeurs de seuil supérieure et inférieure.

Selon un aspect de ce système, le calculateur comporte en outre des deuxièmes moyens de régulation activés lorsque la vitesse du véhicule se situe en dessous de la valeur de seuil de vitesse inférieure et agissant uniquement sur les moyens de freinage du véhicule.

D'autres buts, caractéristiques et avantages de l'invention ressortiront de la description suivante, donnée uniquement à titre d'exemple non limitatif, et faite en référence aux dessins annexés, sur lesquels :
- la figure 1 est un schéma synoptique d'un système de régulation de distance conforme à l'invention ; et
- la figure 2 illustre les principales phases du procédé de régulation de distance mis en oeuvre au moyen du dispositif de la figure 1.

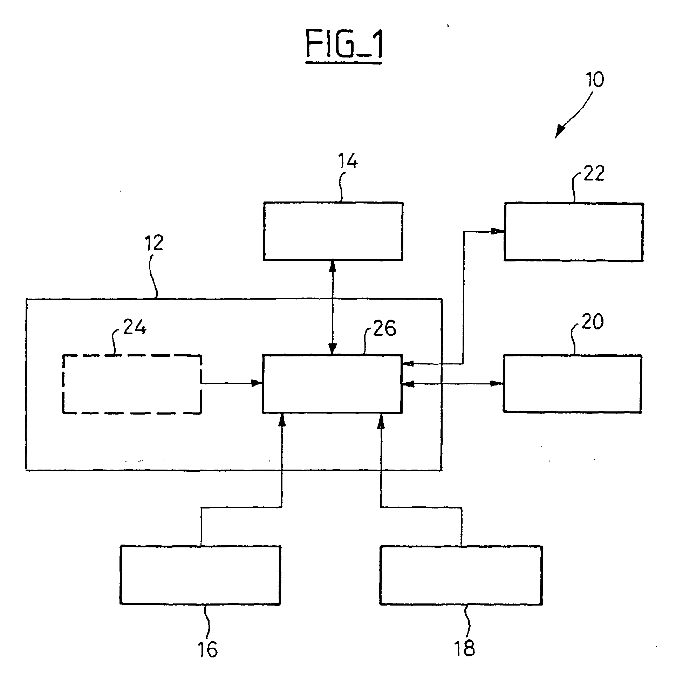

Sur la figure 1, on a représenté un schéma synoptique illustrant les principaux éléments constitutifs d'un système de régulation de distance conforme à l'invention, désigné par la référence numérique générale 10.

Comme on le voit sur cette figure, le système 10 comporte essentiellement un calculateur 12 constitué par une unité centrale embarquée à bord du véhicule automobile, raccordée à une interface homme-machine 14 permettant au système 10 de présenter au conducteur du véhicule des informations relatives aux conditions de fonctionnement du système 10, et permettant au conducteur d'entrer manuellement des consignes de fonctionnement.

L'unité centrale 12 est également raccordée à des capteurs 16 équipant le véhicule automobile, tels que des capteurs de vitesse, d'accélération longitudinale ou transversale, ..., ainsi qu'à des moyens 18 de télémétrie, de type classique, capables de mesurer une distance relative le séparant d'un véhicule suivi.

L'unité centrale 12 incorpore, stockés en mémoire, tous les moyens logiciel permettant de réguler la distance relative entre le véhicule équipé du système 10, désigné par la suite véhicule suiveur, et le véhicule suivi, autour d'une distance de consigne prédéterminée.

A cet effet, elle pilote le groupe motopropulseur 20 du véhicule suiveur, et en particulier le papillon d'admission des gaz, ainsi que les moyens de freinage 22 du véhicule, incorporant, le cas échéant, les freins de parking électriques de manière à provoquer une accélération ou un freinage du véhicule, en fonction du déplacement du véhicule suivi.

Comme on le voit sur la figure 1, l'unité centrale 12 comporte un premier module 24, comprenant essentiellement des moyens de comparaison, destiné à vérifier si des conditions spécifiques d'activation du procédé de régulation de distance sont remplies, ainsi qu'un module 26 de régulation de distance activé s'il a été détecté, par le premier module 24, que les conditions d'activation sont remplies.

Comme indiqué précédemment, le premier module 24 et le deuxième module 26 sont, par exemple, réalisés sous la forme de moyens logiciel mémorisés dans l'unité centrale 12.

En ce qui concerne le module de régulation de distance 26, celui-ci comporte deux étages de régulation qui correspondent à deux modes de régulation de distance distincts.

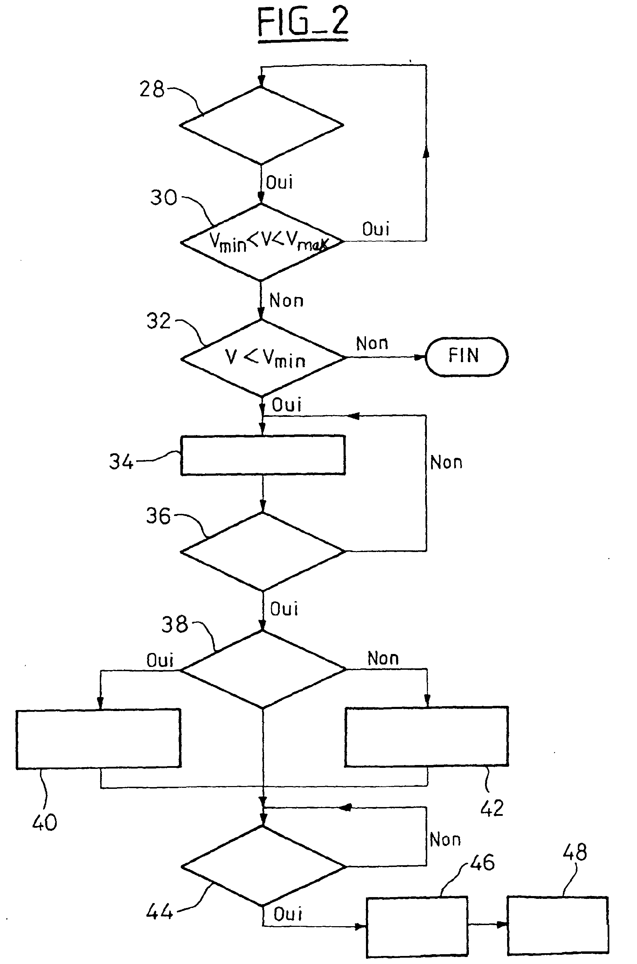

Plus particulièrement, et en se référant également à la figure 2, sur laquelle on a représenté les principales phases du procédé de régulation de distance mis en oeuvre au sein de l'unité centrale 12, le premier étage de régulation, activé dès que le premier module 24 a détecté que la vitesse du véhicule suiveur se situe à l'intérieur d'une première plage de vitesse, allant d'une vitesse minimale Vₘᵢₙ non nulle, typiquement de 30 à 50 km/h, jusqu'à une vitesse maximale Vₘₐₓ de l'ordre de 160 à 180 km/h, met en oeuvre une première phase de régulation 28 au cours de laquelle il pilote le groupe motopropulseur 20 et les moyens de freinage 22, de manière à réguler la distance relative séparant le véhicule suiveur et le véhicule suivi autour d'une valeur de consigne de distance prédéterminée extraite des moyens de mémorisation de l'unité centrale 12.

La technique permettant de piloter le groupe motopropulseur et les moyens de freinage est une technique classique, à la portée d'un homme du métier. Elle ne sera donc pas décrite en détails par la suite.

On notera de même que la consigne de distance peut, en variante, être calculée par l'unité centrale, par exemple en fonction d'un comportement routier souhaité par le conducteur, à partir, par exemple, des consignes de fonctionnement entrées par le conducteur au moyen de l'interface 14.

Ainsi, selon ce premier mode de réalisation, le système de régulation de distance fournit une aide à la conduite au conducteur du véhicule en prenant en charge le contrôle longitudinal du véhicule. Au cours de cette phase, l'unité centrale 12 fournit à l'interface homme-machine 14 les informations adaptées pour informer le conducteur de l'état du système.

Comme indiqué précédemment, cette première phase de régulation 28 est mise en oeuvre dès qu'il a été détecté par le premier module 24 que les conditions d'activation sont remplies, à savoir que la vitesse du véhicule se situe dans la première plage de vitesse,.

Cette première phase de régulation de distance est maintenue tant que le premier module 24 détecte que la vitesse du véhicule se situe à l'intérieur de cette première plage de vitesse (étape 30).

Dès lors, il est mis fin à cette première phase de régulation dès que la vitesse du véhicule se situe en-dehors de la plage de vitesse et, en particulier, dès que la vitesse passe en dessous du seuil de vitesse minimale Vₘᵢₙ

Le deuxième étage du module de régulation de distance 26 est, quant à lui, activé lorsque la vitesse est inférieure au seuil de vitesse minimale Vₘᵢₙ, c'est-à-dire lorsque la vitesse du véhicule se situe dans une deuxième plage de vitesse allant de 0 à Vₘᵢₙ.

Dès lors, lorsque lors de l'étape 30, le premier module 24 de l'unité centrale détecte que la vitesse du véhicule se situe en-dehors de la première plage de vitesse, le premier module 24 réalise un test de manière à détecter que la vitesse du véhicule est inférieure au seuil de vitesse minimale Vₘᵢₙ.

Si tel n'est pas le cas, il est mis fin à la procédure de régulation de distance.

Au contraire, si tel est le cas, c'est-à-dire si la vitesse du véhicule se situe à une valeur inférieure au seuil de vitesse minimale Vₘᵢₙ, la régulation de distance est assurée par le deuxième étage du module de régulation de distance pour mettre alors en oeuvre une deuxième phase de régulation.

Selon ce deuxième mode de régulation, le module de régulation de distance n'agit que sur les moyens de freinage 22 du véhicule. Par conséquent, au cours de cette deuxième phase de régulation, on pilote les moyens de freinage de manière à éviter que la distance relative entre les véhicules suiveur et suivi ne passe en dessous d'une valeur minimale de seuil.

On notera que ce deuxième mode de régulation n'est mis en oeuvre que dans le cas où le véhicule automobile a déjà mis en oeuvre la première phase de régulation, de manière à le positionner à une distance prédéterminée d'un véhicule suivi.

On notera par ailleurs que, dans la mesure où selon ce deuxième mode de régulation, l'unité centrale n'agit pas sur le groupe motopropulseur 20 du véhicule, ce dernier n'est pas en mesure, après avoir mis en oeuvre la deuxième phase de régulation, de revenir au premier mode de régulation.

En d'autres termes, si le véhicule suivi réaccélère, le véhicule suiveur n'est pas en mesure de réaccélérer de manière à suivre ce dernier.

Cependant, au cours de cette deuxième phase 34 de régulation, l'unité centrale 12 reçoit des informations en provenance du groupe motopropulseur 20 et des moyens de freinage 22 ou, en variante, des pédales de frein ou d'accélérateur. Il est alors mis fin à cette deuxième phase de régulation 34 lorsqu'il a été détecté que le conducteur du véhicule a exercé une action sur la pédale de frein ou sur la pédale d'accélérateur. Dès lors, le conducteur reste en permanence maître de son véhicule.

Comme visible sur la figure 2, cette deuxième phase 34 de régulation est associée à un test 36 au cours duquel on vérifie que le véhicule suivi se situe toujours dans l'alignement du véhicule suiveur, de manière à détecter si le véhicule suiveur a changé de file ou si le véhicule suivi à changé de file.

Si tel est le cas, c'est-à-dire si le véhicule suivi disparaît, on vérifie, lors de l'étape 38 suivante, si le véhicule était en train de freiner.

Si tel était le cas, on maintient la pression sur les freins du véhicule (étape 40).

Si tel n'était pas le cas, lors de l'étape 42 suivante, on provoque une fermeture du papillon des gaz de manière à éviter toute accélération du véhicule.

On notera que ce freinage, ou cette inhibition du groupe motopropulseur est ressenti, par le conducteur, comme un ralentissement. Celui-ci reprend alors instinctivement le contrôle de son véhicule. Dès lors, lorsque le système ne détecte plus de véhicule alors qu'il était en train de mettre en oeuvre la deuxième phase de régulation de distance, il oblige le conducteur à reprendre le contrôle de son véhicule.

On notera également que, alors que le système met en oeuvre le deuxième mode de régulation de distance, dans le cas où un nouveau véhicule apparaît devant le véhicule, ce nouveau véhicule est pris en compte par le système de régulation.

Dans le cas où ce nouveau véhicule roule à une vitesse supérieure à celle du véhicule suiveur, ce dernier n'est pas autorisé à le suivre, dans la mesure où, selon cette deuxième régulation de distance, le groupe motopropulseur 20 du véhicule n'est pas activé.

Dans le cas contraire, le deuxième régulateur régule la distance par rapport à ce nouveau véhicule en agissant uniquement sur les moyens de freinage 22, comme mentionné précédemment.

Comme on le conçoit, la régulation de la distance qui vient d'être décrite fournit une aide à la conduite précieuse au conducteur du véhicule automobile, dans la mesure où elle présente un premier mode de régulation, au cours duquel l'on agit sur le groupe motopropulseur 20 du véhicule ainsi que sur les freins, de manière à réguler la distance relative entre les véhicules suiveur et suivi autour d'une valeur de consigne de vitesse prédéterminée et ce, lorsque la vitesse du véhicule se situe à l'intérieur d'une première plage de vitesses, et un deuxième mode de régulation, mis en oeuvre lorsque la vitesse du véhicule se situe à l'intérieur d'une deuxième plage de vitesses inférieure à la première plage de vitesse, au cours de laquelle on agit uniquement sur les freins du véhicule, seul le conducteur étant en mesure de provoquer une réaccélération du véhicule inactivant ainsi le régulateur de distance.

Comme on le conçoit, ce mode de régulation peut ainsi prendre en charge le véhicule, en ce qui concerne son déplacement longitudinal, jusqu'à l'arrêt complet du véhicule.

Dans ce cas, lorsqu'il a été détecté lors de l'étape 44 suivante que le véhicule est stoppé, l'unité centrale 12 positionne le véhicule en mode de stationnement (étape 46).

Au cours de cette étape, l'unité centrale 12 active les moyens de freinage 22 pendant une période de temps déterminée, par exemple de 30 secondes après l'arrêt du véhicule.

Le système de régulation se désactive alors et fournit une information correspondante sur l'interface homme-machine 14 (étape 48).

On notera que, au cours de l'étape 46 de positionnement du véhicule en mode de stationnement, dans le cas où le véhicule est pourvu d'un frein de stationnement ou de « parking » électrique, celui-ci est activé par l'unité centrale 12, dès que le véhicule se situe à l'arrêt.

Bien entendu, d'autres modes de stationnement peuvent être prévus, en particulier pour les véhicules dépourvus de tels moyens de freinage.

Ainsi, par exemple, pour les véhicules automobiles pourvus d'une boîte de vitesses automatique, après relâchement des freins, le papillon des gaz étant maintenu fermé, la boîte de vitesses va provoquer le déplacement du véhicule à une vitesse très faible, de l'ordre de 5 km/h.

En ce qui concerne les véhicules pourvus d'une boîte de vitesses mécanique, après relâchement des freins, le papillon des gaz étant fermé, le moteur cale. Cependant, après que l'information de mode de stationnement a été fournie au conducteur, celui-ci a la possibilité de débrayer, de manière que le véhicule chemine en roues libres.

## Revendications

1. Procédé de régulation de la distance entre deux véhicules automobiles circulant dans la même direction, à savoir un véhicule suiveur et un véhicule suivi, au cours duquel on détermine la distance relative entre les deux véhicules, on acquiert une valeur de mesure de la vitesse du véhicule suiveur et, lorsque la vitesse se situe dans une première plage de vitesses, on met en oeuvre une première phase de régulation de distance au cours de laquelle l'on agit sur les moyens d'accélération (20) et sur les moyens de freinage (22) du véhicule suiveur de manière à réguler la distance relative entre les véhicules autour d'une valeur de consigne de distance, **caractérisé en ce que** lorsque la vitesse du véhicule suiveur se situe dans une deuxième plage de vitesses inférieure à la première plage de vitesses, on met en oeuvre une deuxième phase de régulation de distance au cours de laquelle on agit uniquement sur les moyens de freinage (22) du véhicule suiveur.

2. Procédé de régulation selon la revendication 1, **caractérisé en ce qu'**au cours de la deuxième phase de régulation de distance, après un arrêt du véhicule suiveur, on maintien les moyens de freinage (22) activés pendant une période de temps prédéterminée puis l'on met fin à la deuxième phase de régulation.

3. Procédé de régulation selon la revendication 2, **caractérisé en ce qu'**avant la fin de la deuxième phase de régulation, on averti le conducteur du véhicule suiveur de la fin de cette régulation.

4. Procédé selon l'une des revendications 2 et 3, **caractérisé en ce qu'**avant la fin de la deuxième phase de régulation, on active un frein de stationnement.

5. Procédé de régulation selon l'une quelconque des revendications 1 à 4, **caractérisé en ce que** l'on met fin à la deuxième phase de régulation de distance en cas d'activation des moyens d'accélération (20) ou des moyens de freinage (22) par le conducteur du véhicule suiveur.

6. Système de régulation de distance pour véhicule automobile, comprenant des moyens de télémétrie (18) pour la détection d'une distance relative entre un véhicule automobile équipé dudit système et un véhicule suivi, et un calculateur (12) comprenant des moyens (24) de comparaison entre la vitesse du véhicule et des valeurs de seuil de vitesse supérieure et inférieure et des premiers moyens de régulation (26) agissant sur des moyens d'accélération (20) et sur des moyens de freinage (22) du véhicule de manière à réguler la distance relative entre les véhicules autour d'une valeur de consigne de distance, les premiers moyens de régulation étant activés lorsque la vitesse du véhicule se situe entre les valeurs de seuil supérieure et inférieure, **caractérisé en ce que** le calculateur comporte en outre des deuxièmes moyens de régulation (26) activés lorsque la vitesse du véhicule se situe en dessous de la valeur de seuil de vitesse inférieure et agissant uniquement sur les moyens de freinage du véhicule.

## Patentansprüche

1. Verfahren zur Regelung des Abstands zwischen zwei Kraftfahrzeugen, welche in der gleichen Richtung fahren, d.h. einem folgenden Fahrzeug und einem gefolgten Fahrzeug, im Verlaufe dessen man den relativen Abstand zwischen den zwei Fahrzeugen bestimmt, man einen Messwert der Geschwindigkeit des folgenden Fahrzeugs erlangt und man, wenn die Geschwindigkeit in einem ersten Geschwindigkeitsbereich liegt, eine erste Phase zur Regelung des Abstands umsetzt, im Verlaufe deren man auf die Beschleunigungsmittel (20) und auf die Bremsmittel (22) des folgenden Fahrzeugs derart einwirkt, um den relativen Abstand zwischen den Fahrzeugen um einen Abstandssollwert herum zu regeln, **dadurch gekennzeichnet, dass**, wenn die Geschwindigkeit des folgenden Fahrzeugs in einem zweiten Geschwindigkeitsbereich niedriger als dem ersten Geschwindigkeitsbereich liegt, man eine zweite Phase zur Regelung des Abstandes umsetzt, in deren Verlauf man lediglich auf die Bremsmittel (22) des folgenden Fahrzeugs einwirkt.

2. Verfahren zur Regelung nach Anspruch 1, **dadurch gekennzeichnet, dass** man im Verlaufe der zweiten Abstandsregelungsphase nach einem Stopp des folgenden Fahrzeugs die Bremsmittel (22) über eine vorbestimmte Zeitdauer aktiviert hält und man dann die zweite Regelungsphase beendet.

3. Verfahren zur Regelung nach Anspruch 2, **dadurch gekennzeichnet, dass** man vor dem Ende der zweiten Regelungsphase den Fahrer des folgenden Fahrzeugs über das Ende dieser Regelung unterrichtet.

4. Verfahren nach einem der Ansprüche 2 und 3, **dadurch gekennzeichnet, dass** man vor dem Ende der zweiten Regelungsphase eine Parkbremse aktiviert.

5. Verfahren zur Regelung nach irgendeinem der Ansprüche 1 bis 4, **dadurch gekennzeichnet, dass** man die zweite Abstandsregelungsphase im Falle einer Aktivierung von Beschleunigungsmitteln (20) oder von Bremsmitteln (22) durch den Fahrer des folgenden Fahrzeugs beendet.

6. System zur Regelung des Abstands für ein Kraftfahrzeug, aufweisend Mittel zur Entfernungsmessung (18) für die Erfassung eines relativen Abstands zwischen einem Kraftfahrzeug, welches mit dem System ausgestattet ist, und einem gefolgten Fahrzeug und einen Rechner (12), welcher Mittel (24) zum Vergleichen zwischen der Geschwindigkeit des Fahrzeugs und oberen und unteren Geschwindigkeitsschweltenwerten und erste Mittel zur Regelung (26) aufweist, welche auf Beschleunigungsmittel (20) und auf Bremsmittel (22) des Fahrzeugs derart einwirken, um den relativen Abstand zwischen den Fahrzeugen um einen Abstandssollwert herum zu regeln, wobei die ersten Regelungsmittel aktiviert sind, wenn die Geschwindigkeit des Fahrzeugs sich zwischen dem oberen und dem unteren Schwellenwert befindet, **dadurch gekennzeichnet, dass** der Rechner des Weiteren zweite Mittel zur Regelung (26) aufweist, welche aktiviert sind, wenn die Geschwindigkeit des Fahrzeugs sich unterhalb des unteren Geschwindigkeitsschwellenwertes befindet, und welche lediglich auf die Bremsmittel des Fahrzeugs einwirken.

## Claims

1. A process for regulating the distance between two motor vehicles travelling in the same direction, namely a following vehicle and a followed vehicle, in the course of which the relative distance between the two vehicles is determined, a value in respect of measurement of the speed of the following vehicle is acquired and, when the speed is in a first range of speeds, a first distance regulation phase is implemented, in the course of which action is carried out on the acceleration means (20) and on the braking means (22) of the following vehicle in such a way as to regulate the relative distance between the vehicles around a reference distance value, **characterised in that** when the speed of the following vehicle is in a second range of speeds which is lower than the first range of speeds, a second distance regulation phase is implemented, in the course of which action is carried out solely on the braking means (22) of the following vehicle.

2. A regulating process according to claim 1 **characterised in that** in the course of the second distance regulation phase after the following vehicle is stopped the braking means (22) are maintained activated for a predetermined period of time and then the second regulation phase is terminated.

3. A regulating process according to claim 2 **characterised in that** prior to the end of the second regulation phase the driver of the following vehicle is warned of the termination of said regulation.

4. A process according to one of claims 2 and 3 **characterised in that** prior to the termination of the second regulation phase a parking brake is activated.

5. A regulating process according to any one of claims 1 to 4 **characterised in that** the second distance regulation phase is terminated in the event of activation of the acceleration means (20) or the braking means (22) by the driver of the following vehicle.

6. A distance regulating system for a motor vehicle comprising telemetry means (18) for the detection of a relative distance between a motor vehicle fitted with said system and a followed vehicle, and a computer (12) comprising means (24) for comparing the speed of the vehicle and upper and lower speed threshold values and first regulation means (26) acting on acceleration means (20) and on braking means (22) of the vehicle in such a way as to regulate the relative distance between the vehicles around a reference distance value, the first regulation means being activated when the speed of the vehicle is between the upper and lower threshold values, **characterised in that** the computer further comprises second regulation means (26) activated when the speed of the vehicle is below the lower speed threshold value and acting solely on the braking means of the vehicle.
